# FASCICULE DE BREVET EUROPEEN

(11) **EP 2 903 869 B1**
(45) Date de publication et mention de la délivrance du brevet: **02.11.2016**
(21) Numéro de dépôt: 13782727.5
(22) Date de dépôt: 20.09.2013
(51) Int. Cl.: B60T 7/10, B60T 13/74, B60T 7/12, B60T 8/32, B60T 13/00

(54) **PROCEDÉ D'ACTIVATION OU DE DÉSACTIVATION DES FONCTIONS AUTOMATIQUES D'UN FREIN DE STATIONNEMENT ÉLECTRIQUE**
VERFAHREN ZUR AKTIVIERUNG ODER DEAKTIVIERUNG DER AUTOMATISCHEN FUNKTIONEN EINER ELEKTRISCHEN PARKBREMSE
METHOD FOR ACTIVATING OR DEACTIVATING THE AUTOMATIC FUNCTIONS OF AN ELECTRIC PARKING BRAKE

(30) Priorité: 02.10.2012 FR 1259307
(43) Date de publication de la demande: 12.08.2015
(73) Titulaire: Peugeot Citroën Automobiles SA, 78140 Vélizy Villacoublay (FR)
(72) Inventeur: DELION, Stephane, F-92370 Chaville (FR)
(74) Mandataire: Rosenberg, Muriel Sylvie
(86) Numéro de dépôt international: PCT/FR2013/052195
(87) Numéro de publication internationale: WO 2014/053727

(56) Documents cités:
- DE-A1-102008 034 645
- FR-A1- 2 691 934
- FR-A1- 2 936 474

## Description

La présente invention concerne un procédé d'activation ou de désactivation des fonctions automatiques d'un frein de stationnement électrique FSE d'un véhicule automobile par son conducteur.

Des freins de stationnement électrique, désignés dans ce qui suit par l'acronyme FSE remplacent jusqu'à un certain degré les freins de stationnement traditionnels comprenant généralement un levier de frein à main relativement long pour permettre d'obtenir manuellement des forces de freinage suffisamment élevées. Ce levier de frein à main occupe un certain encombrement, il est généralement sur une console placée au milieu entre les sièges avant d'un véhicule et donc dans un espace qu'il doit partager avec d'autres éléments d'actionnement du véhicule.

Ces freins de stationnement électrique FSE peuvent comprendre également des fonctions automatiques, c'est-à-dire une fonction de serrage automatique et de desserrage automatique lorsque le véhicule vient de s'arrêter ou de démarrer.

Un tel FSE est par exemple connu par la demande de brevet français FR 2 691 934 A1.

Actuellement, les fonctions automatiques du FSE peuvent être soit activées ou désactivées par le conducteur par le biais d'un menu déroulant présent sur un écran du véhicule, soit activées ou désactivées en service après-vente à la demande du conducteur. Dans les pays dits «de grand froid», ces systèmes ne sont parfois pas proposés au conducteur sur des véhicules commercialisés dans ces pays, car au cours des périodes de grand froid le serrage du FSE peut provoquer le collage des plaquettes sur les disques de frein.

Les procédés d'activation ou de désactivation des fonctions automatiques d'un frein de stationnement électrique qui existent actuellement présentent généralement les inconvénients suivants:
Le conducteur n'a pas toujours conscience des conséquences induites par la sélection d'une option de configuration dans un menu déroulant. En effet, les écrans n'ont pas toujours les dimensions suffisantes pour fournir toutes les explications au conducteur (nombre de caractères limités).

Le changement de configuration peut être réalisé par le passager du véhicule si l'écran contenant le menu déroulant est situé au milieu de la planche de bord. Le conducteur ne prend pas toujours conscience du changement d'état.

Une désactivation des fonctions automatiques via le menu déroulant qui n'est pas perçue par le conducteur entraîne soit des problèmes de sécurité (le FSE ne serre pas automatiquement à la fin du cycle de roulage alors que le conducteur a l'habitude de ce serrage), ou encore des problèmes de panne (le FSE ne se desserre pas automatiquement au début du cycle de roulage alors que le conducteur a l'habitude de ce desserrage).

Dans le cas où les fonctions automatiques sont présentes ou non suivant le pays de commercialisation du véhicule, les véhicules ne peuvent pas être «commercialisés de nouveau» dans un autre pays sans qu'une nouvelle reconfiguration soit effectuée par le constructeur.

La désactivation des fonctions automatiques en service Après-Vente est contraignante pour l'utilisateur du véhicule.

C'est le but de la présente invention de remédier à ces inconvénients de l'état de la technique et de proposer un procédé d'activation ou de désactivation des fonctions automatiques d'un frein de stationnement électrique FSE d'un véhicule automobile, qui peut être effectué par l'utilisateur du véhicule lui-même en toute sécurité sans que l'utilisateur du véhicule ne soit obligé de retourner au point de vente.

C'est l'objet de la présente invention de proposer un procédé d'activation ou de désactivation des fonctions automatiques d'un frein de stationnement électrique FSE d'un véhicule automobile par son conducteur, comportant la combinaison des étapes successives suivantes:
- une première étape, où le frein de stationnement électrique FSE doit être complètement serré, le contact d'allumage doit être actif et une pédale préalablement choisie à cet effet doit être relâchée, au cours de cette étape le conducteur maintient, pendant au moins une première temporisation prédéterminée T0, un commutateur appartenant à un circuit de commande du FSE, ledit commutateur à trois positions étant maintenu dans la première position ;
- une deuxième étape, où le frein de stationnement électrique FSE doit être complètement serré, le contact d'allumage doit être actif, au cours de cette étape le conducteur maintient, dans un laps de temps limité par une deuxième temporisation T1, la pédale appuyée et maintient le commutateur à trois positions dans la troisième position de manière concomitante pendant au moins une troisième temporisation T2, à la fin de laquelle le circuit de commande passe de l'état activé à l'état désactivé ou inversement.

Selon un mode de réalisation préféré, quand la première étape est réussie, une alerte visuelle et/ou sonore indique au conducteur sa validation.

Avantageusement, lorsque la première étape est validée, la deuxième temporisation T1 commence le décompte correspondant au temps maximum mis à la disposition du conducteur pour réussir la deuxième étape..

Selon un mode de réalisation préféré, le commutateur utilisé, à trois positions, comprend une languette à bascule qui peut être tirée, relâchée ou poussée et qui revient après sa sollicitation automatiquement dans sa position relâchée.

Avantageusement le commutateur utilisé pour les opérations d'activation/désactivation peut être le même que celui prévu pour serrer et desserrer manuellement le FSE.

De préférence, la pédale choisie est la pédale de frein.

Selon une variante, la pédale choisie est la pédale d'embrayage ou la pédale d'accélérateur.

Avantageusement, la première temporisation T0 a une durée de l'ordre de plusieurs secondes, de préférence de 5 à 10 secondes, la deuxième temporisation T1 a une durée plus longue que la troisième temporisation T2 de l'ordre de plusieurs secondes, de préférence de 7 à 15 secondes.

Selon un mode de réalisation préféré, la deuxième temporisation T1 et la troisième temporisation T2 se terminent au même moment.

De préférence, le changement de mode effectif est signalé au conducteur par l'apparition/la disparition d'un témoin sur un tableau de bord si les fonctions automatiques sont désactivées/activées.

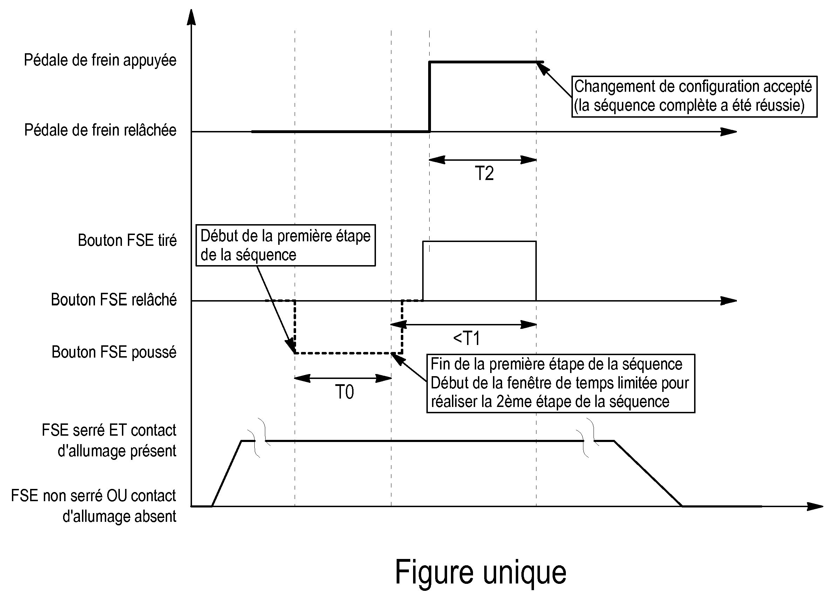

L'invention va maintenant être décrite plus en détail ci-après à l'aide de la figure unique qui montre un diagramme en fonction du temps illustrant la séquence complète du procédé selon l'invention.

Au début du procédé selon l'invention, il y a une vérification si les conditions préalables pour la première étape sont requises. Le FSE doit être complètement serré, le contact d'allumage doit être présent et la pédale de frein dans ce mode de réalisation doit être relâchée.

Un commutateur à trois positions qui fait partie d'un circuit de commande du FSE est dans l'exemple représenté un bouton comprenant une languette à bascule qui peut être tirée, relâchée ou poussée. Toutefois le commutateur utilisé pour les opérations d'activation/désactivation peut avantageusement être le même que celui prévu pour serrer et desserrer manuellement le FSE. En effet, le commutateur qui remplace le levier de frein à main a généralement 3 positions (tirée, relâchée, poussée).

Après sa sollicitation, cette languette du bouton revient automatiquement dans sa position relâchée. Pendant une première temporisation T0, qui peut durer de préférence entre cinq et dix secondes, le conducteur doit maintenir le bouton FSE en position poussée pour réussir cette première étape. Pendant cette première étape, l'état du FSE, c'est-à-dire l'état d'activation ou de désactivation des fonctions automatiques, ne changera pas car il est nécessaire d'appuyer sur la pédale de frein pour autoriser ce changement d'état du FSE. Une alerte visuelle indiquera au conducteur pendant cette phase s'il souhaite poursuivre la séquence qu'il doit appuyer sur la pédale de frein pour réaliser un changement d'état de son FSE. Cette alerte peut également être sonore.

Lorsque la première étape est validée, une deuxième temporisation T1 commence son décompte. Cette temporisation peut de préférence avoir une durée de l'ordre de grandeur de sept à quinze secondes. C'est le temps maximum mis à disposition pour le conducteur pour réussir la deuxième étape.

Les options requises au préalable pendant cette deuxième étape sont: Le FSE doit être complètement serré, le contact d'allumage doit être présent.

Pour réussir cette deuxième étape, le conducteur doit dans le laps de temps limité par la temporisation T1 maintenir la pédale de frein appuyée et maintenir le bouton de commande FSE en position tirée de manière concomitante pendant au moins la durée de la troisième temporisation T2.

La deuxième et la troisième temporisation T1 et T2 se terminent au même moment. A la fin de cette période, le circuit de commande du FSE change l'état des fonctions automatiques et ce changement de mode effectif est signalé au conducteur par l'apparition/la disparition d'un témoin au tableau de bord si les fonctions automatiques sont désactivées/ activées.

Les avantages de la solution proposée sont les suivants:

L'appui sur la pédale de frein garantit que l'action est réalisée par le conducteur présent au poste de conduite et non pas par le passager.

Le fait de devoir passer par les 3 positions possibles du bouton commutateur de commande FSE (tirée, relâchée, poussée) permet de réaliser l'ensemble des diagnostics dans ces trois positions et de garantir le bon fonctionnement du bouton avant d'autoriser la désactivation des fonctions automatiques.

C'est ainsi que si l'intention du conducteur est simplement de desserrer manuellement son FSE en poussant le bouton FSE un message d'information interviendra aussitôt pour lui indiquer qu'il doit accompagner cette sollicitation d'un appui sur la pédale de frein ce qu'il s'empressera de faire.

Par contre le fait de commencer la séquence par un appui sur le bouton de commande FSE sans appui sur la pédale de frein permet de s'assurer que le conducteur veut sciemment activer ou désactiver ces fonctions automatiques car il doit ignorer pendant la temporisation T0 le message d'information qui lui est proposé, à savoir appuyer sur la pédale de frein.

Le choix d'une temporisation T0 de plusieurs secondes (5 à 10 secondes) et la combinaison de plusieurs informations pour autoriser le changement de mode permet de sauvegarder le changement de mode immédiatement après la validation de l'étape 2 et non plus à la coupure du contact comme c'est le cas dans les solutions actuelles.

## Revendications

1. Procédé d'activation ou de désactivation des fonctions automatiques d'un frein de stationnement électrique FSE d'un véhicule automobile par son conducteur, **caractérisé en ce que** la combinaison des étapes successives s'effectue de la manière suivante :
- une première étape, où le frein de stationnement électrique FSE doit être complètement serré, le contact d'allumage doit être actif et une pédale préalablement choisie à cet effet doit être relâchée, au cours de cette étape le conducteur maintient, pendant au moins une première temporisation prédéterminée (T0), un commutateur appartenant à un circuit de commande du FSE, ledit commutateur à trois positions étant maintenu dans la première position ;
- une deuxième étape, où le frein de stationnement électrique FSE doit être complètement serré, le contact d'allumage doit être actif, au cours de cette étape le conducteur maintient, dans un laps de temps limité par une deuxième temporisation (T1), la pédale appuyée et maintient le commutateur à trois positions dans la troisième position de manière concomitante pendant au moins une troisième temporisation (T2), à la fin de laquelle le circuit de commande passe de l'état activé à l'état désactivé ou inversement.

2. Le procédé de la revendication 1, **caractérisé en ce que** lorsque la première étape est réussie, une alerte visuelle et/ou sonore indique au conducteur sa validation.

3. Le procédé de la revendication 2, **caractérisé en ce que** lorsque la première étape est validée, la deuxième temporisation (T1) commence le décompte correspondant au temps maximum mis à la disposition du conducteur pour réussir la deuxième étape.

4. Procédé selon l'une quelconque des revendications précédentes, **caractérisé en ce que** le commutateur utilisé, à trois positions, comprend une languette à bascule qui peut être tirée, relâchée ou poussée et qui revient après sa sollicitation automatiquement dans sa position relâchée.

5. Le procédé de la revendication 4 **caractérisé en ce que** le commutateur utilisé est le même que celui prévu pour serrer et desserrer manuellement le FSE.

6. Procédé selon l'une quelconque des revendications précédentes, **caractérisé en ce que** la pédale choisie est la pédale de frein.

7. Procédé selon l'une quelconque des revendications 1 à 5, **caractérisé en ce que** la pédale choisie est la pédale d'embrayage ou la pédale d'accélérateur.

8. Procédé selon l'une quelconque des revendications précédentes, **caractérisé en ce que** la première temporisation (T0) a une durée de l'ordre de plusieurs secondes, de préférence de 5 à 10 secondes, la deuxième temporisation (T1) a une durée plus longue que la troisième temporisation (T2) de l'ordre de plusieurs secondes, de préférence de 7 à 15 secondes.

9. Le procédé de la revendication 8, **caractérisé en ce que** la deuxième temporisation (T1) et la troisième temporisation (T2) se terminent au même moment.

10. Procédé selon l'une quelconque des revendications précédentes, **caractérisé en ce que** le changement de mode effectif est signalé au conducteur par l'apparition/la disparition d'un témoin sur un tableau de bord si les fonctions automatiques sont désactivées/activées.

## Patentansprüche

1. Verfahren zum Aktivieren oder Deaktivieren der automatischen Funktionen einer elektrischen Parkbremse FSE eines Kraftfahrzeugs durch seinen Fahrer, **dadurch gekennzeichnet, dass** die Kombination der aufeinanderfolgenden Schritte wie folgt abgewickelt wird:
- ein erster Schritt, bei dem die elektrische Parkbremse FSE vollständig angezogen sein muss, der Zündkontakt aktiv sein muss und ein zuvor dazu ausgewähltes Pedal freigegeben sein muss, wobei im Laufe dieses Schritts der Fahrer während mindestens einer ersten vorbestimmten Verzögerung (T0) einen Umschalter betätigt, der zu einer Steuerschaltung der FSE gehört, wobei der Umschalter mit drei Positionen in der ersten Position gehalten wird,
- ein zweiter Schritt, bei dem die elektrische Parkbremse FSE vollständig angezogen sein muss, der Zündkontakt aktiv sein muss, wobei im Laufe dieses Schritts der Fahrer während einer Zeitspanne, die durch eine zweite Verzögerung (T1) begrenzt ist, das Pedal gedrückt hält und den Umschalter mit drei Positionen in der dritten Position gleichzeitig während mindestens einer dritten Verzögerung (T2) hält, an deren Ende die Steuerschaltung vom aktivierten Zustand auf den deaktivierten Zustand übergeht oder umgekehrt.

2. Verfahren nach Anspruch 1, **dadurch gekennzeichnet, dass**, wenn der erste Schritt erfolgreich war, eine visuelle und/oder akustische Warnung dem Fahrer ihre Bestätigung meldet.

3. Verfahren nach Anspruch 2, **dadurch gekennzeichnet, dass**, wenn der erste Schritt bestätigt wird, die zweite Verzögerung (T1) die Abwärtszählung, die der maximalen Zeit entspricht, die dem Fahrer bereitgestellt wird, um den zweiten Schritt erfolgreich abzuschließen, beginnt.

4. Verfahren nach einem der vorhergehenden Ansprüche, **dadurch gekennzeichnet, dass** der verwendete Umschalter mit drei Positionen eine Lasche mit Kippe umfasst, die gezogen, freigegeben oder geschoben werden kann, und die nach ihrer Beanspruchung automatisch in ihre freigegebene Position zurückkehrt.

5. Verfahren nach Anspruch 4, **dadurch gekennzeichnet, dass** der verwendete Umschalter derselbe ist wie der, der zum manuellen Anziehen und Freigeben der FSE vorgesehen ist.

6. Verfahren nach einem der vorhergehenden Ansprüche, **dadurch gekennzeichnet, dass** das ausgewählte Pedal das Bremspedal ist.

7. Verfahren nach einem der Ansprüche 1 bis 5, **dadurch gekennzeichnet, dass** das ausgewählte Pedal das Kupplungspedal oder das Gaspedal ist.

8. Verfahren nach einem der vorhergehenden Ansprüche, **dadurch gekennzeichnet, dass** die erste Verzögerung (T0) eine Dauer in der Größenordnung von mehreren Sekunden hat, vorzugsweise 5 bis 10 Sekunden, dass die zweite Verzögerung (T1) eine längere Dauer hat als die dritte Verzögerung (T2) in der Größenordnung von mehreren Sekunden, vorzugsweise 7 bis 15 Sekunden.

9. Verfahren nach Anspruch 8, **dadurch gekennzeichnet, dass** die zweite Verzögerung (T1) und die dritte Verzögerung (T2) gleichzeitig enden.

10. Verfahren nach einem der vorhergehenden Ansprüche, **dadurch gekennzeichnet, dass** der Wechsel des effektiven Modus dem Fahrer durch das Erscheinen/das Verschwinden einer Anzeigelampe auf dem Armaturenbrett gemeldet wird, wenn die automatischen Funktionen deaktiviert/aktiviert werden.

## Claims

1. A method for activating or deactivating automatic functions of an electric parking brake EPB of a motor vehicle by the driver of same, **characterized in that** a the combination of the successive steps is carried out as follows:
- a first step, in which the electric parking brake EPB must be fully engaged, the ignition contact must be active and a pedal previously chosen for this purpose must be released, during which step the driver holds a switch belonging to a control unit of the EPB in position for at least a first predefined time delay (T0), said three-position switch being held in the first position of same;
- a second step, in which the electric parking brake EPB must be fully engaged, the ignition contact must be active, during which step the driver holds the pedal down for a time period limited by a second time delay (T1), and concomitantly holds the three-position switch in the third position for at least a third time delay (T2), at the end of which the control circuit switches from the activated state to the deactivated state, or vice versa.

2. The method of Claim 1, **characterized in that** when the first step has been successful, a visual and/or audible alert indicates its validation to the driver.

3. The method of Claim 2, **characterized in that** when the first step is validated, the second time delay (T1) commences the count corresponding to the maximum time made available to the driver for successfully performing the second step.

4. The method according to any one of the preceding claims, **characterized in that** the three-position switch which is used includes a rocker tongue which can be pulled, released or pushed and which returns, after its application, automatically into its released position.

5. The method of Claim 4, **characterized in that** the switch which is used is the same as that provided for manually engaging and disengaging the EPB.

6. The method according to any one of the preceding claims, **characterized in that** the selected pedal is the brake pedal.

7. The method according to any one of Claims 1 to 5, **characterized in that** the selected pedal is the clutch pedal or the accelerator pedal.

8. The method according to any one of the preceding claims, **characterized in that** the first time delay (T0) has a duration in the order of several seconds, preferably of 5 to 10 seconds, the second time delay (T1) has a longer duration than the third time delay (T2) in the order of several seconds, preferably of 7 to 15 seconds.

9. The method according to Claim 8, **characterized in that** the second time delay (T1) and the third time delay (T2) terminate at the same moment.

10. The method according to any one of the preceding claims, **characterized in that** the effective change of mode is signalled to the driver by the appearance/disappearance of an indicator on a dashboard if the automatic functions are deactivated/activated.
